Europäisches Patentamt

(19) European Patent Office

Office européen des brevets

(11) Publication number: **0 018 345**
**B1**

(12) **EUROPEAN PATENT SPECIFICATION**

(45) Date of publication of patent specification: **27.07.83**

(51) Int. Cl.³: **B 23 B 39/16**

(21) Application number: **80870023.1**

(22) Date of filing: **18.04.80**

(54) **Multiple spindle drilling head.**

(30) Priority: **23.04.79 BE 1009366**

(43) Date of publication of application:
**29.10.80 Bulletin 80/22**

(45) Publication of the grant of the patent:
**27.07.83 Bulletin 83/30**

(84) Designated Contracting States:
**AT BE DE FR GB IT NL SE**

(56) References cited:
**DE - A - 2 507 662**
**DE - A - 2 646 826**
**DE - A - 2 701 516**
**US - A - 3 134 276**
**US - A - 3 635 570**

(73) Proprietor: **BEKAERT ENGINEERING**
**Leo Bekaertstraat 1**
**B-8550 Zwevegem (BE)**

(72) Inventor: **De Muynck, Gabriel**
**Stationsstraat 120**
**B-8850 Ardooie (BE)**

(74) Representative: **Lombaerts, Jozef et al,**
**N.V. Bekaert S.A. Leo Bekaertstraat 1**
**B-8550 Zwevegem (BE)**

Multiple spindle drilling head

The invention relates to a multiple spindle drilling head for working wooden workpieces with a central drive appliance in an enclosing cage and at least two driven tools each of them clamped in an individual tool holder.

For machining wooden workpieces, for example furniture parts, a great number of operations are sequentially carried out. Existing equipment in the metal working sector is less suitable because it is either unsuitable for certain operations, or not sufficiently economical. Particularly the drilling of longitudinal holes, i.e. narrow longitudinal slots, is an operation which in the furniture sector must take place very rapidly and with great accuracy.

A multiple spindle drilling head is disclosed in US 3.134.276 in which the tool holder unit has a central drive in an enclosing cage and at least two tools which are each held in a disconnectable individual tool holder wherein the tool holders are mounted on the cage so that they are movable around the central drive. The drilling head disclosed in DE 2507662 has a number of belt driven tool holders each mounted on separate circle segments of the enclosing cage. Repositioning on differing distances is possible.

Both the appliances as disclosed have a complicated construction and drive system, and the tool holders are designed to be operated in sequential order.

The multiple spindle drilling head according to the invention relates to an apparatus containing different tool holders with axes of rotation parallel to the central drive appliance. The tools are in the standard version drills or finger-cutters, but may consist also of other existing cutting tools.

The drilling head has a simple design and contains a belt transmission. It is easily adjustable and can make several holes according a predetermined pattern, even within very small distances. The drilling head is very suitable to be used on a guide arrangement for a toolholder unit as described in the Belgian patent 875.770.

The multiple spindle drilling head according to the invention contains a central drive in an enclosing cage and at least two driven tools which are held in individual tool holders mounted on corresponding support arms, are rotatable about axes parallel to the central drive and have disconnectable belt connection with the central drive. The enclosing cage has a T-shaped slot concentric with the central drive for carrying the support arms and allows angular adjustment of each support arm without changing the belt length. A choice of support arms of varying lengths is provided and the individual tool holder drives each contain a simple dog-clutch and associated bearing assembly. At least two toolholders can be driven simultaneously.

Preferably at least two tool holders are mounted on support arms of the same length at the periphery of the same circle.

The following description is a clarification of an embodiment of the multiple drilling head which is particularly suitable for making the end connections of wooden furniture parts. A cyclic reciprocating movement of the multiple spindle drilling head for example when using end cutters is very useful to obtain a number of longitudinal slots or dowel holes which are an advantageous and strong connection in furniture assembly.

Figure 1 is a front view of a multiple spindle drilling head.

Figure 2 is a cross-sectional view of the drilling head of Figure 1 according to the vertical plan I I.

To clarify the principle, no more than two tool holders are shown in driven condition, which corresponds with the standard embodiment. However, it is possible to extend the principle to more concentrically mounted tool holders.

The cover plate 1 forms the front side of the enclosing cage 33 which encases the transmission belt drive.

The cylinders 2 guide the drilling head with its driving means in its movement towards and away from the workpiece.

A T-shaped slot 3 is concentrically made in the cover plate 1. An enlargement 4 at the front allows to introduce fitting segmental clamping blocks 5 into the slot and to remove them out of it.

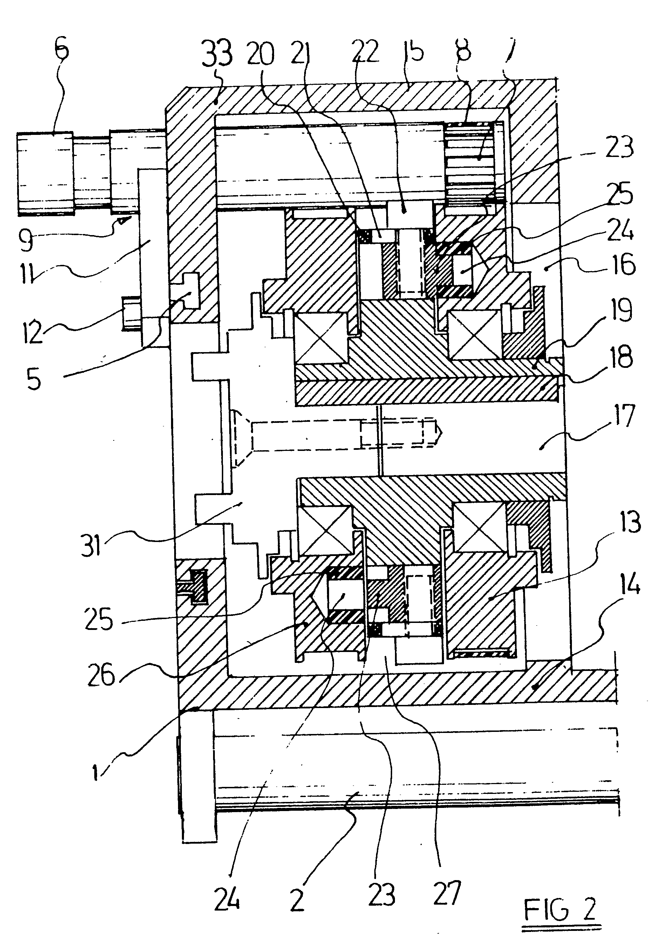

The cylindrical chunk 6 which at the front side is provided with a belt pulley 7 in which the toothed belt 8 meshes, is bearing-supported in the connecting piece 9 which consist of the bearing bush 10 and the supporting arm 11. The supporting arm 11 is fixedly clamped by means of a screw 12 to the clamping block 5 in the T-shaped slot. The toothed belt 8 is in mesh with a fitting motor-driven belt pulley 13. The cover plate 1 is fixed by an underplate 14 and a clip 15 to the rear side 16. These components together form the enclosing cage of the central drive. These details are also shown in Figure 2.

The central shaft 17 is directly driven by the motor or via a speed reducing device. The rotation is transmitted by the key 18 to the catch ring 20 via the bearing flange 19. On the circumference of the catch ring there are a couple of transverse slots 21 in which a wide-headed screw 22 can be slid without play so that if so desired, the catch pin 23 can be slid laterally in an aperture 24 of the belt pulley 13 and the belt pulley is fixedly clamped to the driving shaft 17. A ring 25 made of elastomer material will damp possible vibrations.

In a similar manner the second belt pulley 13 and pulley 7 can be connected to a second dog clutch system 27 to drive a second chuck 28 which is mounted on a long supporting arm 29.

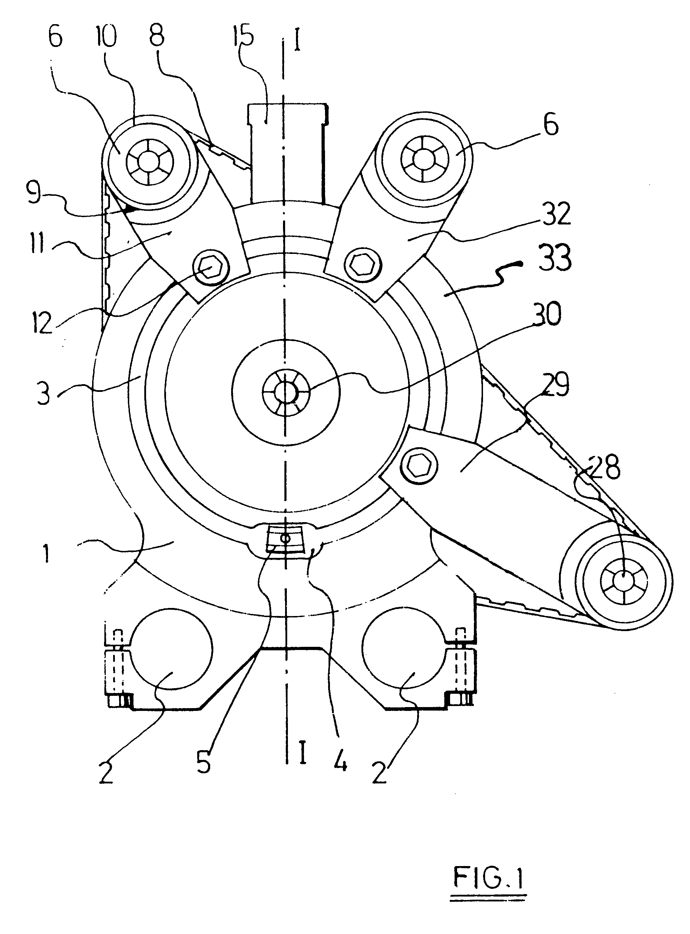

For simplicity only two belt drives are described here. It is evident that it is possible to mount a greater series of tool holders and a corresponding number of belt drives. In addition, a chuck 30 may also be mounted on the cover plate 31 of the central drive (shown in Figure 1).

The supporting arm 29 in Figure 1 has a greater length than supporting arm 11. In this manner holes can be drilled at an arbitrary distance from each other.

If so desired, a supporting arm 32 with equal length can be used instead.

Although the clip 15 is a very useful reinforcement of the enclosing cage, it can be omitted by using a stronger type of enclosing cage 33 so that supporting arms can be mounted and adjusted to all positions.

## Claims

1. Multiple spindle drilling head for machining wooden workpieces with a central drive (17) in an enclosing cage (33) and at least two driven tools which are held in individual tool holders (6) mounted on corresponding support arms (11, 29) are rotatable about axes parallel to the central line (17) and have disconnectable belt connection with the central drive (17), characterized in that the enclosing cage (33) has a T-shaped slot (3) concentric with the central drive (17) for carrying the support arms (11, 29) and allowing angular adjustment of each support arm (11, 29) without changing the belt length, that a choice of support arms (11, 29) of varying lengths is provided, that the individual toolholder drives each contains a simple dog-clutch (27) and associated bearing assembly (24) and that at least two toolholders can be driven simultaneously.

2. Multiple spindle drilling head according to claim 1 characterized in that at least two toolholders are mounted on support arms (11, 29) of the same length at the periphery of the same circle.

## Patentansprüche

1. Mehrspindliger Bohrkopf zur Bearbeitung von Holzwerkstücken mit einem Zentralantrieb (17) in einem umschliessende Gehäuse (33), und mindestens zwei angetriebenen Werkzeugen, die in einzelnen, auf übereinstimmenden Stützarmen (11, 29) montierten Werkzeughaltern (6) festgehalten werden, um Achsen parallel zum Zentralantrieb (17) rotierbar sind, und eine trennbare Riemenverbindung mit dem Zentralantrieb (17) haben, dadurch gekennzeichnet, dass das umschliessende Gehäuse (33) eine T-förmige Rille (3) hat, die konzentrisch mit dem Zentralantrieb (17) ist umd die Stützarme (11, 29) zu tragen und eine Winkeleinstellung jedes Stützarms (11, 29) zu ermöglichen, ohne die Riemenlänge zu ändern, dass eine Auswahl von Stützarmen (11, 29) variierender Längen vorgesehen ist, dass jeder einzelne Werkzeughalter-Antrieb eine einfache Klauenkupplung (27) und begleitende Tragvorrichtung (24) enthält, und, dass mindestens zwei Werkzeughalter gleichzeitig angetrieben werden können.

2. Vielfacher Spindelbohrkopf nach Anspruch 1, dadurch gekennzeichnet, dass mindestens zwei Werkzeughalter auf Stützarmen (11, 29) derselben Länge auf dem Umfang desselben Kreises montiert sind.

## Revendications

1. Tête de forage à plusieurs broches pour usinage de pièces en bois à commande centrale (17) dans une cage (33) qui renferme ce dernier et à au moins deux outils commandés qui sont fixés dans des porte-outil individuels (6) montés sur des bras de support correspondants (11, 29), qui peuvent tourner autour d'axes parallèles à la commande centrale (17) et qui possèdent une connexion par courroie avec la commande centrale (17) qui peut être désaccouplée, caractérisé en ce que la cage (33) qui renferme la commande centrale possède une rainure en forme de T (3) concentrique par rapport à la commande centrale (17) pour porter les bras de support (11, 29) et qui permet l'adjustement angulaire de chaque bras de support (11, 29) sans modifier la longueur de la courroie, qu'il est prévu un choix de bras de support (11, 29) de longueur variable, que chaque commande individuelle de porte-outil comprend une griffe de serrage simple (27) avec un assemblage de support associé (24), et qu'au moins deux porte-outil peuvent être commandés simultanément.

2. Tête perceuse à broches multiples selon la revendication 1, caractérisée en ce qu'au moins deux porte-outil sont montés sur des bras de support (11, 29) de même longueur à la périphérie du même cercle.

FIG.1

0 018 345

FIG 2